# EUROPEAN PATENT SPECIFICATION

(11) **EP 1 298 392 B1**
(45) Date of publication and mention of the grant of the patent: **14.06.2006**
(21) Application number: 02011326.2
(22) Date of filing: 23.05.2002
(51) Int. Cl.: F23N 5/24, F16K 17/36

(54) **Device for shutting off the flow of gas in a gas-fed apparatus**
Absperreinrichtung des Gasstroms in einem Gasgerät
Dispositif pour arrêter l'écoulement du gaz dans un appareil à gaz

(30) Priority: 28.09.2001 IT PR20010065
(43) Date of publication of application: 02.04.2003
(73) Proprietor: K Industries S.r.l., 43040 Scarzara (Parma) (IT)
(72) Inventor: Mori, Grabriele, 43045 Fornovo Di Taro (Parma) (IT)
(74) Representative: Gotra, Stefano

(56) References cited:
- GB-A- 944 981
- US-A- 2 770 666
- US-A- 4 378 815
- US-B1- 6 213 142
- PATENT ABSTRACTS OF JAPAN vol. 005, no. 029 (M-056), 21 February 1981 (1981-02-21) & JP 55 155975 A (HAMAI SEISAKUSHO:KK), 4 December 1980 (1980-12-04)
- PATENT ABSTRACTS OF JAPAN vol. 1997, no. 10, 31 October 1997 (1997-10-31) & JP 09 170673 A (RINNAI CORP), 30 June 1997 (1997-06-30)
- PATENT ABSTRACTS OF JAPAN vol. 014, no. 424 (M-1024), 12 September 1990 (1990-09-12) & JP 02 166309 A (MATSUSHITA ELECTRIC IND CO LTD), 27 June 1990 (1990-06-27)

## Description

The present invention relates to a device for shutting off the flow of gas in a gas-fed apparatus, of the type comprising an inlet for the gas, an outlet for feeding the gas to the apparatus, means for shutting off the gas flowing out towards the apparatus according to the preamble of claim 1. Such a device is known from document GB-A-944 981.

Infrared heaters are known which operate by means of gas coming from tanks or from a supply pipeline, normally used for heating limited outdoors spaces, such as areas with tables in bars, restaurants, hotels, receptions or also circumscribed spaces such as terraces, porticoes or large tents.

The aforesaid heaters are normally constituted by a support pedestal housing the gas tank, if one is present, and by a preferably telescopic stem, connected to the pedestal, with the purpose of supporting a burner, typically made of stainless steel. Above the burner is positioned a circular cap, which is heated by the burner and irradiates heat in a limited space.

According to current regulations, said headers must be provided with safety devices able to interrupt the flow of gas to the burner to allow the flame to be extinguished in case of falls or excessive oscillations of the heater, for instance due to strong wind gusts. Said safety devices are currently used also on other apparatuses able to generate heat by means of burners with free flames, such as catalytic stoves.

In accordance with the prior art, safety devices exist comprising mercury micro-switches, which generate an electrical signal able to command a valve for shutting off the flow of gas in case of falls or oscillations of the heater apparatus. In particular, the mercury, moving inside the micro-switch, causes the closure of an electrical circuit that commands a solenoid valve or a traditional valve, connected to the gas supply conduit.

The micro-switches briefly described above have some drawbacks.

First of all, said switches, being very sensitive, can cause the burner to shut down accidentally even in the presence of slight oscillations of the heater apparatus.

Secondly, since the voltages involved are very low, said micro-switches are subject to oxidation problems and hence can determine the irregular and unreliable operation of the heater apparatus.

An additional disadvantage is represented by the fact that said switches, containing mercury, can be harmful to the environment if they are not disposed of properly.

An aim of the present invention is to eliminate the aforesaid drawbacks making available a device for shutting off the flow of gas in a gas-fed apparatus provided with burner with free flame, which device is able to interrupt the flow of gas to cause the flame to be extinguished, in case of upsets or severe oscillations of the apparatus itself.

An additional aim of the present invention is to propose a safety device that intervenes in the presence of oscillations of a measure that is predetermined, but variable according to a user's requirements.

Yet another aim of the present invention is to obtain a safety device that can be inserted in any area of a gas supply conduit and possibly also on existing apparatuses to make them compliant with current regulations.

A further aim is to obtain this in an extremely simple and economical manner.

Said aims are fully achieved by the device for shutting of the flow of gas in a gas-fed apparatus of the present invention, which is characterised by the contents of the claims set out below and in particular in that it comprises means for shutting off the gas flowing out towards the apparatus, so shaped as mechanically to block the supply of gas to the apparatus in correspondence with an inclination or oscillation, relative to a vertical axis and greater than a predetermined measure, of at least a part of the apparatus whereto the device is applied.

Said means preferably comprise a movable element, which can be a sphere or a conical or cone frustum element, inserted in the device and able to move automatically from an assent position wherein it does not interfere with the passage of the gas from the inlet to the outlet from the device, to an active shut-off position in which it obstructs the passage of the gas, directly or by means of a shutter.

The device preferably comprises:
- a first portion in which are obtained the gas inlet and a seat for elastic means, for instance a spring, acting on a shutter so shaped as to obstruct a conduit for the passage of gas between the first portion and
- a second portion interconnected with the first portion and defining a chamber for housing the movable element, which in the assent position interacts with the shutter to keep it in the position where the passage is open overcoming the action of the elastic means, whilst in the shut-off position it lets the shutter free to close the passage under the thrust of the elastic means.

This and other characteristics shall become more readily apparent from the description that follows of a preferred embodiment illustrated in the accompanying drawing tables, in which:

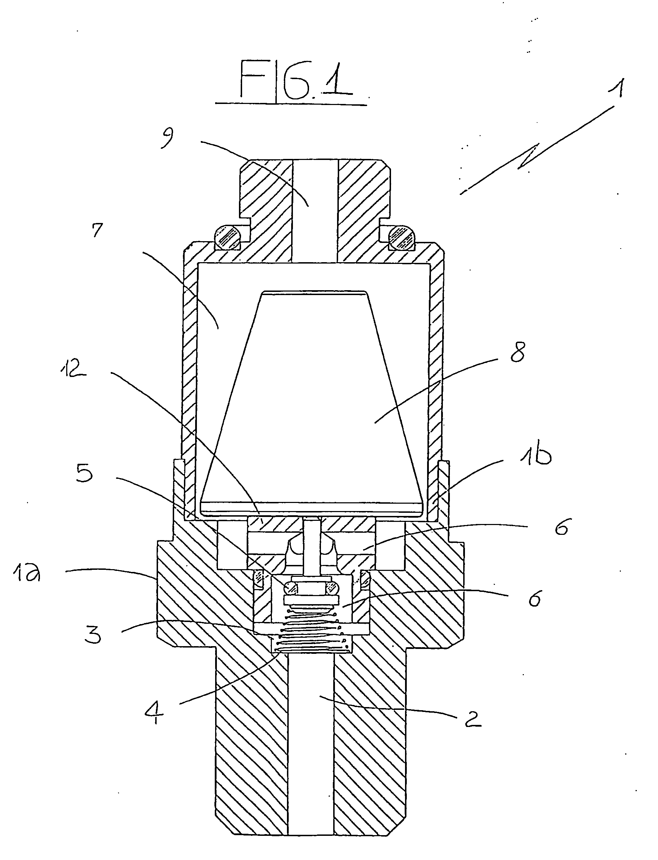

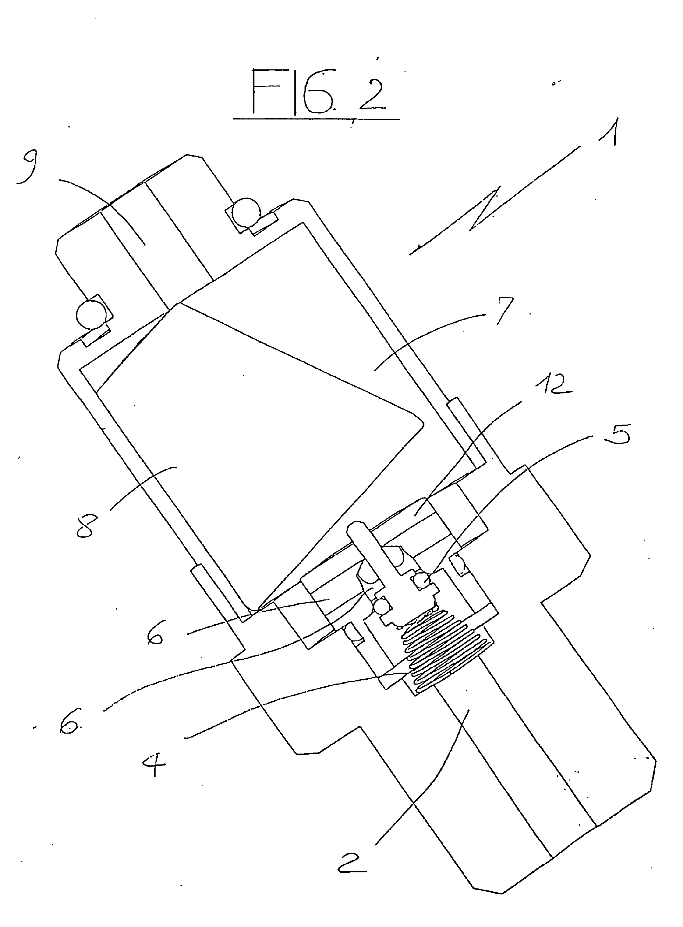

- Figures 1 and 2 show an embodiment of the device in a median vertical section, respectively in position of normal passage of the gas and in safety shut-off position.

With reference to the figures, the reference number 1 globally indicates a device for shutting off the flow of gas in a gas-fed apparatus, not shown herein, and constituted for instance by a catalytic stove or by a space heater provided with burner in the upper area, connected through a vertical stem to a base in which is housed a gas tank to supply the burner.

The device 1 comprises a first portion 1a in which is obtained the inlet 2 of the gas and a first seat 3 for elastic means 4 acting on a shutter 5 so shaped as to obstruct a conduit 6 for the passage of gas between the first portion 1a and a second portion 1b interconnected to the first portion. The second portion 1b defines a chamber 7 that houses a movable element 8.

In accordance with Figures 1 and 2, the movable element 8 is a body having substantially triangular or trapezoidal cross section, preferably a cone or cone frustum, made of brass and possibly at least partially hollow in its interior. In an additional embodiment not illustrated herein, said body defining the movable element 8 can be a pyramid or pyramid frustum with square or hexagonal base.

The movable element 8 can pass from an assent position (shown in Figure 1) in which it interacts with the shutter 5 pressing thereon to keep it in the position wherein it leaves the conduit 6 open, overcoming the action of the elastic means 4, in the specific case a spring, to a shut-off position (shown in Figure 2) wherein it frees the shutter which, thrust by the spring, closes the gas passage conduit 6.

The movable element 8, which constitutes means for shutting off the gas flowing out towards the apparatus, mechanically blocks in automatic fashion the supply of gas to the apparatus when there is an inclination or oscillation exceeding a certain measure relative to the vertical axis of the apparatus or at least of that part of the apparatus whereto the device is applied.

The device 1 is essentially a safety device with automatic mechanical action that is applied to new or existing apparatuses (it is sufficient to cut the pipe that supplies the gas to the burner, insert the device banding it or appropriately fastening the inlet 2 and the outlet 9 to the free segments of the supply pipe) and that, when it detects an inclination or oscillation of the apparatus, intervenes to block the supply of gas to the burner.

Thus, for instance, if the apparatus falls, in falling it undergoes a displacement relative to the vertical axis which automatically causes the intervention of the device and hence the automatic shutting off of the flame due to lack of fuel, preventing fire hazards.

In an embodiment not illustrated herein the movable element 8 can close the conduit 6 directly with no need to act directly thereon by means of a shutter.

In the embodiment illustrated in Figures 1 and 2, the cone frustum, bearing with the generatrix to the lateral walls of the chamber 7 as a consequence of a predetermined inclination of the apparatus, rotates and disengages from the shutter 5, allowing the latter to shut off the flow of gas, by effect of the spring 4 which brings it in position of closure of the conduit 6.

In particular, by intervening on dimensions and inclination of the truncated cone, it is possible to cause the device 1 to intervene at the degrees of inclination deemed most appropriate.

The chamber 7 has an abutment body 12, appropriately holed to allow the passage of the gas and whereon bears the mobile element 8, when the latter is in the assent position.

The device of the present invention is substantially a one-way fall-proof and oscillation-proof safety valve for gas-fed apparatuses, which unlike electrical switches is insensitive to shaking (for instance those that typically occur during the ignition phase as a consequence of the pressure exerted by the operator on the ignition button) which could interrupt the supply of gas in undesired fashion.

The present device is not subject to the oxidation problems typical of mercury switches that act as voltage switches and is free from their pollution problems..

The dimensioning of the device of the present invention depends both on the delivery pressure of the gas and on the required flow rate: as these parameters increase, the size of the mobile element 8 to be used also increases. In any case the device is destined to burners employing reduced pressure (30-50 millibar) and not for direct connection to the gas pipeline.

The device can be associated to different types of junctions and thus can be mounted directly on the burner (with a threaded outlet junction), along the gas pipe (with two rubber holder junctions) or directly after the pressure reducer on the tank (with a threaded inlet junction).

In regard to the construction of the device the abutment body 12 is a separate piece which is interposed between the first portion 1a and the second portion 1b during the assembly of the device 1.

## Claims

1. Device (1) for intercepting the flow of gas in a gas-fed apparatus, of the type comprising an inlet (2) for the gas, an outlet (9) for supplying the gas to the apparatus, means (8) for shutting off the gas flowing out towards the apparatus, **characterised in that** said means (8) being so shaped as mechanically to block the supply of the gas to the apparatus in correspondence with an inclination or an oscillation, relative to a vertical axis and exceeding a predetermined measure, of at least a part of the apparatus whereto the device (1) itself is applied, said means (8) for shuttind off the gas comprising a movable element (8), inserted in the device (1) and so shaped as to be movable automatically from an assent position in which it does not interfere with the passage of the gas from the inlet (2) to the outlet (9) from the device (1), to an active shut-off position in which it obstructs the passage of the gas, directly or through a shutter (5), **characterized in that** the movable element (8) is a body having a substantially trapezoidal or triangular cross section.

2. Device as claimed in claim 1, wherein the movable element (8) or the shutter (5), in the active shut-off position, obstructs the passage of the gas in an intermediate position between the inlet (2) in the device (1) and the outlet (9) therefrom.

3. Device as claimed in claim 1, **characterised in that** it comprises:
a first portion (1a) in which is obtained the inlet (2) of the gas and a seat (11) for elastic means (4) acting on a shutter (5) so shaped as to obstruct a conduit (6) for the passage of the gas between the first portion (1a) and
a second portion (1b) interconnected to the first portion (1a), said second portion (1b) defining a chamber (7) for housing the movable element (8), said movable element (8) in the assent position interacting with the shutter (5) to maintain it in the position where it leaves the passage open overcoming the action of the elastic means (4), said movable element (8) in the shut-off position leaving the shutter (5) free to close the passage under the thrust of the elastic means (4).

4. Device as claimed in claim 3, wherein said elastic means (4) comprise a spring.

5. Gas-fed apparatus, **characterised in that** it comprises a device (1) for shutting off the flow of gas as claimed in any of the previous claims.

## Patentansprüche

1. Vorrichtung (1) zum Absperren eines Gasstroms in einem mit Gas betriebenen Gerät, der Art umfassend einen Eintritt (2) für das Gas, einen Austritt (9) zum Zuführen des Gases zu dem Gerät, Mittel (8) zum Schliessen des in Richtung auf das Gerät ausströmenden Gases, wobei die genannten Mittel (8) so ausgebildet sind, dass sie die Zufuhr des Gases zu dem Gerät auf mechanische Weise bei einer Neigung oder einer Schwingung gegenüber einer senkrechten Achse und bei Überschreiten eines vorbestimmten Wertes zumindest eines Teiles des Gerätes, an dem die Vorrichtung (1) angebracht ist, verhindern, wobei die genannten Mittel (8) zum Schliessen des Gases ein bewegliches Element (8) umfassen, das in die Vorrichtung (1) eingeführt und so ausgebildet ist, dass es automatisch von einer Freigabestellung, in der es den Durchfluss des Gases von dem Eintritt (2) zu dem Austritt (9) der Vorrichtung (1) nicht beeinflusst, in eine aktive Schließstellung beweglich ist, in der es den Durchfluss des Gases unmittelbar oder über einen Schieber (5) verhindert, **dadurch gekennzeichnet, dass** das bewegliche Element (8) aus einem Körper besteht, der einen im wesentlichen trapezförmigen oder dreieckigen Querschnitt aufweist.

2. Vorrichtung nach Anspruch 1, bei dem das bewegliche Element (8) oder der Schieber (5) in der aktiven Schließstellung den Durchfluss des Gases in einer Zwischenstellung zwischen dem Eintritt (2) in die Vorrichtung (1) und dem Austritt (9) aus derselben verhindert.

3. Vorrichtung nach Anspruch 1, **gekennzeichnet durch**:
einen ersten Bereich (1a), in dem der Eintritt (2) des Gases und eine Aufnahme (11) für Federmittel (4) ausgebildet sind, welche auf einen Schieber (5) einwirken, der so ausgebildet ist, dass er einen Kanal (6) für den Durchfluss des Gases zwischen dem ersten Bereich (1a) und
einem zweiten, mit dem ersten Bereich (1a) verbundenen Bereich (1b) verschliesst, wobei der genannte zweite Bereich (1b) eine Kammer (7) zur Aufnahme des beweglichen Elementes (8) ausbildet, wobei das bewegliche Element (8) in der Freigabestellung mit dem Schieber (5) zusammenwirkt, um diesen in der Stellung zu halten, in der er den Durchfluss gegen die Wirkung der Federmittel (4) offenhält, wobei das bewegliche Element (8) den Schieber (5) in der Schließstellung freigibt, um den Durchfluss unter dem Druck der Federmittel (4) zu schliessen.

4. Vorrichtung nach Anspruch 3, bei dem die genannten Federmittel (4) eine Feder umfassen.

5. Gasbetriebenes Gerät, **dadurch gekennzeichnet, dass** es eine Vorrichtung (1) zum Schliessen des Gasflusses nach einem der vorhergehenden Ansprüche umfasst.

## Revendications

1. Dispositif (1) d'interception du flux de gaz dans un appareil d'alimentation en gaz, du type comprenant une entrée (2) pour le gaz, une sortie (9) d'alimentation du gaz à l'appareil, des moyens (8) de coupure du gaz sortant vers l'appareil, lesdits moyens (8) étant conformés de manière à bloquer mécaniquement l'alimentation en gaz de l'appareil en correspondance d'une inclinaison ou d'une oscillation, par rapport à un axe vertical et excédant une mesure prédéterminée, d'au moins une partie de l'appareil sur lequel le dispositif (1) est appliqué, lesdits moyens (8) de coupure du gaz comprenant un élément mobile (8), inséré dans le dispositif (1) et conformé de manière à être mobile automatiquement d'une position neutre, dans laquelle il n'interfère pas avec le passage du gaz de l'entrée (2) à la sortie (9) du dispositif (1), à une position active de coupure dans laquelle il obstrue le passage du gaz, directement ou au travers d'un obturateur (5), **caractérisé en ce que** l'élément mobile (8) est un corps pourvu d'une section transversale substantiellement trapézoïdale ou triangulaire.

2. Dispositif selon la revendication 1, dans lequel l'élément mobile (8) de l'obturateur (5), dans la position active de coupure, obstrue le passage du gaz dans une position intermédiaire entre l'entrée (2) dans le dispositif (1) et la sortie (9) de ce dernier.

3. Dispositif selon la revendication 1, **caractérisé en ce qu'**il comprend:
une première portion (1a) dans laquelle on obtient l'entrée (2) du gaz et un logement (11) pour des moyens élastiques (4) agissant sur un obturateur (5) conformé de manière à obstruer un conduit (6) pour le passage du gaz entre la première portion (1a) et
une seconde portion (1b) interconnectée à la première portion (1a), ladite seconde portion (1b) définissant une chambre (7) pour loger l'élément mobile (8), ledit élément mobile (8) dans la position neutre interagissant avec l'obturateur (5) pour le maintenir dans la position dans laquelle il laisse le passage ouvert en compensant l'action des moyens élastiques (4), ledit élément mobile (8) dans la position de coupure laissant l'obturateur (5) libre de fermer le passage sous la poussée des moyens élastiques (4).

4. Dispositif selon la revendication 3, dans lequel lesdits moyens élastiques (4) comprennent un ressort.

5. Appareil d'alimentation en gaz, **caractérisé en ce qu'**il comprend un dispositif (1) de coupure du flux de gaz selon n'importe laquelle des revendications précédentes.
